(19) Europäisches Patentamt
European Patent Office
Office européen des brevets

(11) **EP 4 773 194 A1**

(12) **EUROPEAN PATENT APPLICATION**
published in accordance with Art. 153(4) EPC

(43) Date of publication:
08.07.2026 Bulletin 2026/28

(21) Application number: 24859770.0

(22) Date of filing: 27.08.2024

(51) International Patent Classification (IPC):
*H01M 4/13* (2010.01)      *H01M 4/62* (2006.01)
*H01M 10/052* (2010.01)      *H01M 10/0562* (2010.01)

(52) Cooperative Patent Classification (CPC):
H01M 4/13; H01M 4/62; H01M 10/052;
H01M 10/0562; Y02E 60/10

(86) International application number:
PCT/JP2024/030499

(87) International publication number:
WO 2025/047738 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.08.2023 JP 2023140944

(71) Applicant: Niterra Co., Ltd.
Nagoya-shi, Aichi 461-0005 (JP)

(72) Inventors:
• KATAOKA, Kazuki
Nagoya-shi, Aichi 461-0005 (JP)

• KAJIURA, Ryunosuke
Nagoya-shi, Aichi 461-0005 (JP)
• SUZUKI, Akihiro
Nagoya-shi, Aichi 461-0005 (JP)
• WATANABE, Yuu
Nagoya-shi, Aichi 461-0005 (JP)
• HIKOSAKA, Hideaki
Nagoya-shi, Aichi 461-0005 (JP)
• KITAMURA, Masahiro
Nagoya-shi, Aichi 461-0005 (JP)

(74) Representative: Grünecker Patent- und
Rechtsanwälte
PartG mbB
Leopoldstraße 4
80802 München (DE)

(54) **ELECTRODE AND POWER STORAGE DEVICE**

(57) The purpose of the present invention is to provide an electrode (11) and a power storage (10) capable of reducing charge transfer resistance. The electrode contains particles (20) of a solid electrolyte. The ratio of the particles is 0.1-30 vol%, and the average of the distance (D) between the particles in a range (18) in which six or more particles appear in a width of 400 $\mu m^2$ on the cross-section of the electrode is 1 $\mu m$ or more. The average of the equivalent circle diameters of the particles appearing in the cross section is preferably 10 $\mu m$ or less, and the average of the equivalent circle diameters of an active material (19) appearing in the cross section is preferably 5 $\mu m$ or more. The power storage device includes the electrode.

*FIG. 4*

# Description

## TECHNICAL FIELD

The present invention relates to an electrode containing particles of a solid electrolyte and to a power storage device.

## BACKGROUND ART

Reduction in internal resistance of a power storage device is advantageous for enhancing input/output characteristics of the power storage device. Particles of a solid electrolyte (hereinafter may also be referred to as solid electrolyte particles) contained in an electrode of a power storage device contribute to reduction in ion transfer (charge transfer) resistance. Thus, Patent Literature 1 discloses a related technique which includes choosing the material of such particles and regulating the amount of particles in an electrode.

## CITATION LIST

## PATENT LITERATURE

Patent Literature 1: WO2018-198494A

## SUMMARY OF INVENTION

## TECHNICAL PROBLEM

There is room for improvement in the related technique in terms of reducing the charge transfer resistance.

## SOLUTION TO PROBLEM

The present invention has been accomplished to meet the above demand. Thus, an object of the invention is to provide an electrode in which charge transfer resistance can be reduced. Another object is to provide a power storage device including the electrode.

In a first aspect of the invention to attain the above objects, there is provided an electrode containing solid electrolyte particles. The electrode contains the particles in an amount of 0.1 vol% or more and 30 vol% or less. An average inter-particle distance in a region in which 6 or more of the particles appear within an area of 400 $\mu m^2$ in a cross-section of the electrode is 1 $\mu m$ or more.

In a second aspect, the particles appearing in the cross-section of the first aspect have an average circle-equivalent diameter of 10 $\mu m$ or less.

In a third aspect, the particles appearing in the cross-section of the first aspect have an average circle-equivalent diameter of 5 $\mu m$ or less.

In a fourth aspect, the electrode of any of the first to third aspects further contains an active material, and the active material appearing in the cross-section have an average circle-equivalent diameter of 5 $\mu m$ or more.

In a fifth aspect, the particles of any of the first to fourth aspects are formed of an oxide.

In a sixth aspect, the particles of the fifth aspect has a garnet-type crystal structure including Li, La, and Zr.

In a seventh aspect, there is provided a power storage device having an electrode of any of the first to sixth aspects.

## ADVANTAGEOUS EFFECTS OF INVENTION

The electrode of the present invention contains solid electrolyte particles in an amount of 0.1 vol% or more and 30 vol% or less, with the average inter-particle distance in a region in which 6 or more of the particles appear within an area of 400 $\mu m^2$ in a cross-section of the electrode being 1 $\mu m$ or more. As a result, the number of reaction sites attributed to the particles dispersed in the electrode can increase, to thereby reduce charge transfer resistance.

## BRIEF DESCRIPTION OF DRAWINGS

[FIG. 1] Cross-sectional view of a power storage device of an embodiment.
[FIG. 2] Schematic view of a garnet-type crystal structure.
[FIG. 3] Cross-sectional view of an active material and particles appearing in a region of an active material layer.
[FIG. 4] Cross-sectional view of particles appearing in the region.

## DESCRIPTION OF EMBODIMENTS

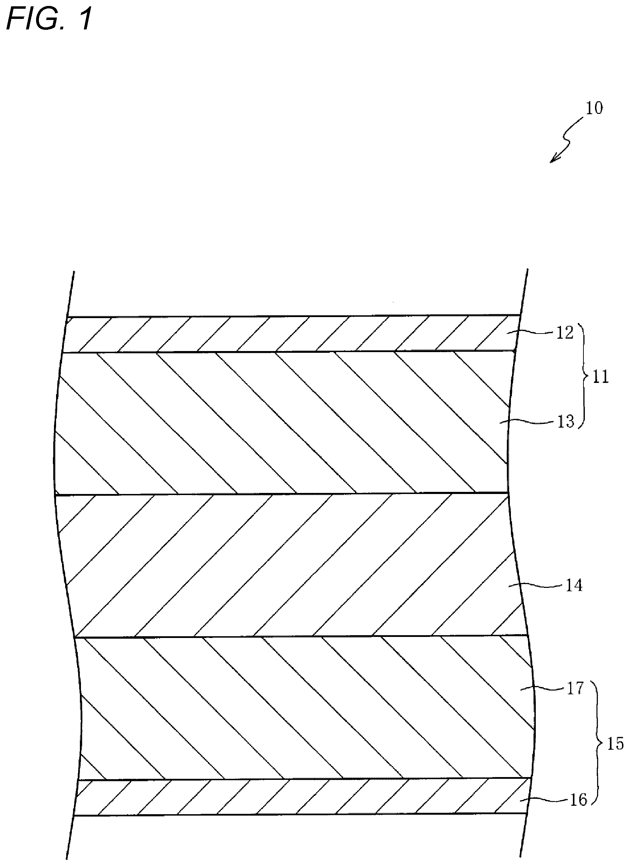

Hereinafter, preferred embodiments of the present invention will be described with reference to attached drawings. FIG. 1 is a schematic cross-section of a power storage device 10 of an embodiment. The power storage device 10 has a positive electrode 11, a negative electrode 15, and a separator 14 which isolates the positive electrode 11 from the negative electrode 15. Examples of the ion species transferred between the positive electrode 11 and the negative electrode 15 via the separator 14 (hereinafter referred to as an "electric charge carrier") include cations such as Li$^+$, Na$^+$, K$^+$, Mg$^{2+}$, Cu$^+$, and Ag$^+$.

The separator 14 contains an electrolyte in which electric charge carriers move. The electrolyte is appropriately selected from a solid, a gel, and liquid (electrolytic solution). When an electrolytic solution is used, the separator 14 is formed of a porous body having an electric insulation property. Examples of the porous body include a nonwoven fabric and a porous membrane which allow passage of electric charge carries. Examples of the material of the porous body include cellulose, polypropylene, polyethylene, polyimide, alumina, etc.

The electrolytic solution is a solution containing a supporting electrolyte in an aqueous or non-aqueous solvent. The supporting electrolyte may be dissolved in a mixture of an aqueous solvent and a non-aqueous solvent. A non-aqueous solvent is generally categorized to a molecular solvent whose most part is formed of molecules, and an ionic liquid composed of a cation and an anion. One reason for using a non-aqueous solvent in an electrolytic solution is to widen the potential window as compared with an aqueous solvent. An ionic liquid is preferred, since it can widen the potential window as compared with an aqueous solvent.

When a molecular solvent is used as a non-aqueous solvent, an aprotic solvent is preferred for widening the potential window of the electrolytic solution. Examples of the aprotic solvent include a cyclic ester, a chain ester, an aliphatic carboxylate ester, a phosphate ester, a nitrile, an amide, a sulfur compound, a ketone, an ether, a nitro compound, and a fluorous solvent. A mixture thereof may also be used.

The ionic liquid is a compound composed of a cation and an anion and assumes liquid at ambient temperature and pressure. When the solvent of an electrolytic solution is an ionic liquid, flame resistance of the electrolytic solution can be enhanced. Suitably, the ionic liquid has a cation which is one or more species selected from the group consisting of ammonium, imidazolium, pyrrolidinium, and piperidinium.

No particular limitation is imposed on the anion component of the ionic liquid. Examples of the anion component include inorganic anions such as $BF_4^-$ and $N(SO_2F)_2^-$ and organic anions such as $B(C_6H_5)_4^-$ $CH_3SO_3^-$, $CF_3SO_3^-$, $N(SO_2CF_3)_2^-$, and $N(SO_2C_4F_9)_2^-$.

The ionic liquid may also be a solvated ionic liquid. Examples of the solvated ionic liquid include a product of a supporting electrolyte dissolved in a sulfone-based solvent such as sulfolane and a sulfolane derivative or a glyme-type solvent such as tetraglyme.

When the electric charge carrier is $Li^+$, the supporting electrolyte is a lithium salt. Examples of the anion of the supporting electrolyte include $OH^-$, a halide ion (e.g., $I^-$,$Cl^-$, or $Br^-$), $SCN^-$, $BF_4^-$, $BF_3(CF_3)^-$, $BF_3(C_2F_5)^-$, $PF_6^-$,$ClO_4^-$, $SbF_6^-$, $N(SO_2F)_2^-$, $N(SO_2CF_3)_2^-$, $N(SO_2C_2F_5)_2^-$, $B(C_6H_5)_4^-$, $B(O_2C_2H_4)_2^-$, $C(SO_2F)_3^-$, $C(SO_2CF_3)_3^-$, $CF_3COO^-$, $CF_3SO_2O^-$, $C_6F_5SO_2O^-$, $B(O_2C_2O_2)_2^-$, and $RCOO^-$ (R represents a C1 to C4 alkyl group, a phenyl group, or a naphthyl group). The supporting electrolyte may be a mixture of the lithium salts.

The supporting electrolyte concentration of the electrolytic solution is 0.2 mol/dm³ or higher, preferably 0.5 mol/dm³ or higher, more preferably 1.0 mol/dm³ or higher. As the supporting electrolyte concentration increases, the number of the solvent molecules coordinating with the electric charge carrier increases. As a result, the amount of non-coordinating solvent decreases, and coordination with the counter anion (i.e., ion association) becomes dominant. Thus, reductive decomposition of the electrolytic solution is suppressed, and oxidation potential rises, to thereby provide a wider potential window. The supporting electrolyte concentration of the electrolytic solution is preferably 4.0 mol/dm³ or lower, more preferably 2.0 mol/dm³ or lower. When the supporting electrolyte concentration exceeds 4.0 mol/dm³, there is considerably observed tendency of a drop in ion conductivity due to an increase in viscosity of electrolytic solution.

A solid-form or a gel-form electrolyte includes one or more members selected from among a sulfide-based electrolyte, an oxide-based electrolyte, a hydride-based electrolyte, a halide-based electrolyte, and an organic electrolyte. Examples of the separator 14 include a sintered body containing any of the electrolytes, a compact formed by compressing a mass of electrolyte particles, and a composite of electrolyte particles and electrolytic solution.

Examples of the sulfide-type electrolyte include a crystalline thio-LISICON type, an $Li_{10}GeP_2S_{12}$ type, an argyrodite type, an $Li_7P_3S_{11}$ type, and a glass- or glass ceramic-type typically $Li_2S-P_2S_5$. Examples of the oxide-type electrolyte include a NASICON-type material, a LISICON-type material, an oxide having a perovskite structure, and an oxide having a garnet-type structure.

Examples of the hydride-type electrolyte include a solid solution of $LiBH_4$ with a lithium halide compound (LiI, LiBr, or LiCl) or lithium amide ($LiNH_2$). Examples of the halide-type solid electrolyte include $Li_3YCl_6$. Examples of the organic solid electrolyte include polyethylene oxide, polypropylene oxide, and polyacrylonitrile.

The NASICON-type material is represented by a general formula $A_xM_2(TO_4)_3$. Examples of A include Na and Li; examples of M include Zr, Ti, V, Mn, Cr, Fe, Ni, Al, and Ge; and examples of T include P, Si, and As. Collectively, examples include $Na_3V_2(PO_4)_3$, $Li_{1+x}Al_xTi_{2-x}(PO_4)_3$, and $Li_{1+x}Ge_xTi_{2-x}(PO_4)_3$. Examples of the LISICON-type material include $Li_{4-2x}Zn_xGeO_4$ ($0 \leq x \leq 1$). Examples of the oxide having a perovskite structure include $Li_xLa_{(1-x)/3}NbO_3$ and $La_{2/3-X}Li_{3X}TiO_3$ ($0 \leq x \leq 1$).

The positive electrode 11 includes an active material layer 13 and a current-collector 12 stacked thereon. The current-collector 12 is a member having an electrical conductivity. Examples of the material of the current-collector 12 include metals selected from among Ni, Ti, Fe, and Al; alloys each containing two or more of such metal elements; stainless steel; and carbon material.

The active material layer 13 contains an active material and solid electrolyte particles. Examples of the active material include a metal oxide in which the metal includes a transition metal, a sulfur-containing active material, and an organic active material. In the case where the electric charge carrier is $Li^+$, examples of the metal oxide in which the metal includes a transition metal include a metal oxide in which the metal includes Li and at least one species selected from among Mn, Co, Ni, Fe, Cr, and V. Specific examples of the metal oxide in which the metal includes a transition metal include Li-$CoO_2$, $LiNi_{0.8}Co_{0.15}Al_{0.05}O_2$, $LiMn_2O_4$, $LiNiVO_4$, $LiNi_{0.5}Mn_{1.5}O_4$, $LiNi_{1/3}Mn_{1/3}Co_{1/3}O_2$, and $LiFePO_4$.

Examples of the sulfur-containing active material include S, $TiS_2$, NiS, $FeS_2$, $Li_2S$, $MoS_3$, and a sulfur-carbon composite. Examples of the organic active material include radical compounds such as 2,2,6,6-tetramethylpiperidinoxyl-4-yl methacrylate and polytetramethylpiperidinoxyl vinyl ether; quinone compounds; radialene compounds; tetracyanoquinodimethane; and phenazine oxide.

Examples of the solid electrolyte contained in the active material layer 13 include one or more members selected from among a sulfide-based material, an oxide-based material, a hydride-based material, a halide-based material, and an organic material. Since the material of the above solid electrolyte is the same as that employed in the separator 14, the repeated description on the material will be omitted.

The solid electrolyte contained in the active material layer 13 is preferably an oxide-based electrolyte. Among such electrolytes, preferred is a complex oxide having a garnet-type crystal structure including Li, La, and Zr, since the complex oxide achieves an ion conductivity on the order of $10^{-3}$ S/cm and has high chemical stability. The garnet-type crystal structure is represented by a formula $C_3A_2B_3O_{12}$.

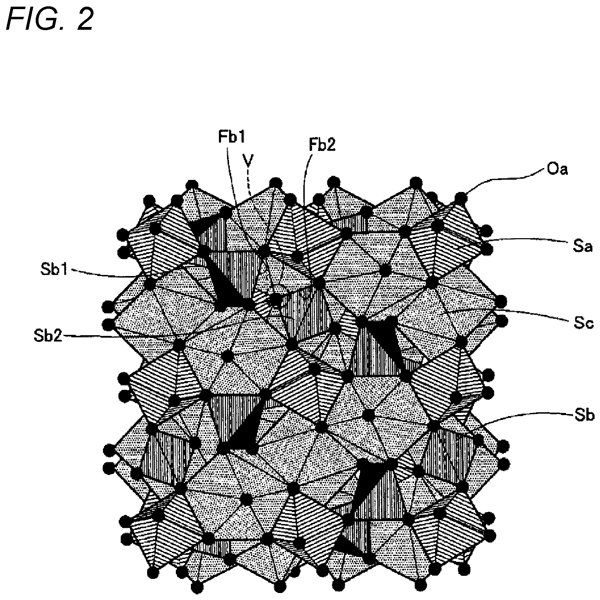

FIG. 2 is a schematic view of a garnet-type crystal structure. In the garnet-type crystal structure, a C site (Sc) coordinates with an oxygen atom (Oa) in a dodecahedral manner; an A site (Sa) with an oxygen atom (Oa) in an octahedral manner; and a B site (Sb) with an oxygen atom (Oa) in a tetrahedral manner. The solid electrolyte generally has a garnet-type crystal structure, but Li may be present in a site (i.e., vacancy V), which is a site realizing octahedral coordination with an oxygen atom (Oa). The vacancy V is present at a site disposed, for example, between a B site (Sb1) and a B site (Sb2). The Li present in vacancy V coordinates, in an octahedral manner, with oxygen atoms (Oa) forming an octahedral structure which includes tetrahedral faces Fb1 and Fb2, in which Fb1 forms the B site (Sb1), and Fb2 forms the B site (Sb2). In one possible case, in $Li_7La_3Zr_2O_{12}$ having a garnet-type crystal structure, La is present in the C sites (Sc); Zr in the A sites (Sa), and Li in the B sites (Sb) and the vacancy (V).

The garnet-type crystal structure may be determined through X-ray diffraction. The garnet-type crystal structure exhibits an XRD pattern similar to that of an X-ray diffraction file No. 422259 ($Li_7La_3Zr_2O_{12}$) of CSD (Cambridge Structural Database). As compared with No. 422259, the solid electrolyte may have differences in the type of elements forming oxide, the Li concentration, and the like. Therefore, diffraction angle and intensity ratio may vary. A typical crystal structure in relation to the above is a cubic system (space group: Ia-3d ("-" is an over-line representing rotary inversion), JCPDS:84-1753).

A typical example of the material of the solid electrolyte having a garnet-type crystal structure is $Li_7La_3Zr_2O_{12}$. In the solid electrolyte, a part of the elements forming $Li_7La_3Zr_2O_{12}$ may be substituted by another element, or a small amount of additional element may be added thereto without substituting the original elements. Examples of the additional element include at least one element selected from the group consisting of Mg, Al, Si, Ca, Ti, V, Ga, Sr, Y, Nb, Sn, Sb, Ba, Hf, Ta, W, Bi, Rb, and lanthanoids (except for La).

Examples of the solid electrolyte include $Li_6La_3Zr_{1.5}W_{0.5}O_{12}$, $Li_{6.15}La_3Zr_{1.75}Ta_{0.25}Al_{0.2}O_{12}$, $Li_{6.15}La_3Zr_{1.75}Ta_{0.25}Ga_{0.2}O_{12}$, $Li_{6.25}La_3Zr_2Ga_{0.25}O_{12}$, $Li_{6.4}La_3Zr_{1.4}Ta_{0.6}O_{12}$, $Li_{6.5}La_3Zr_{1.75}Te_{0.25}O_{12}$, $Li_{6.75}La_3Zr_{1.75}Nb_{0.25}O_{12}$, $Li_{6.9}La_3Zr_{1.675}Ta_{0.289}Bi_{0.036}O_{12}$, $Li_{6.46}Ga_{0.23}La_3Zr_{1.85}Y_{0.15}O_{12}$, $Li_{6.8}La_{2.95}Ca_{0.05}Zr_{1.75}Nb_{0.25}O_{12}$, $Li_{7.05}La_{3.00}Zr_{1.95}Gd_{0.05}O_{12}$, and $Li_{6.20}Ba_{0.30}La_{2.95}Rb_{0.05}Zr_2O_{12}$.

Particularly, the solid electrolyte preferably contains at least one of Mg and element A (A represents at least one element selected from the group consisting of Ca, Sr, and Ba), and satisfies all the following conditions (1) to (3) regarding mole proportions of the elements. Alternatively, the solid electrolyte preferably contains both Mg and element A, and satisfies all the following conditions (4) to (6) regarding mole proportions of the elements. From the viewpoint of elevating the ion conductivity of the solid electrolyte, element A is preferably Sr.

$$(1)\ 1.33 \leq Li/(La+A) \leq 3$$

$$(2)\ 0 \leq Mg/(La+A) \leq 0.5$$

$$(3)\ 0 \leq A/(La+A) \leq 0.67$$

$$(4)\ 2.0 \leq Li/(La+A) \leq 2.5$$

$$(5)\ 0.01 \leq Mg/(La+A) \leq 0.14$$

$$(6)\ 0.04 \leq A/(La+A) \leq 0.17$$

With reference back to FIG. 1, further description is given. The negative electrode 15 includes the active material layer 17 and a current-collector 16 stacked thereon. The current-collector 16 is a member having an electrical conductivity. Examples of the material of the current-collector 16 include metals selected from among Ni, Ti, Fe, Cu, and Si; alloys each containing two or more of such metals; stainless steel; and carbon material.

The active material layer 17 contains the active material. In order to lower the charge transfer resistance of the active material layer 17, the active material layer 17 may further contain a conducting aid. Examples of the conducting aid include carbon black, acetylene black, Ketjen black, carbon fiber, Ni, Pt, and Ag.

No particular limitation is imposed on the material of the active material contained in the active material layer 17, so long as occlusion and release of the electric charge carrier can be achieved. The active material is appropriately chosen in accordance with the type of the electric charge carrier. Examples of the active material include carbonaceous materials (such as porous carbon, natural carbon, artificial carbon, easy-to-graphitize carbon, hard-to-graphitize carbon, and carbon fiber), $Li_4Ti_5O_{12}$, Si, Si-Li alloy, a compound containing Si and O as constituent elements (hereinafter referred to as "SiOx," wherein $0.5 \leq X \leq 1.5$), metallic lithium, lithium alloys (such as Li-Al alloy, Li-Sn alloy, Li-Si alloy, Li-Mg alloy, and Li-Si alloy), In-Sb alloy, and Si-Li alloy. Examples of the SiOx include Si oxide and a structure of microcrystalline or amorphous Si dispersed in amorphous $SiO_2$ matrix.

The power storage device 10 is fabricated through, for example, the following procedure. Specifically, the active material, the solid electrolyte particles, and a conducting aid are mixed together, and a solution of a binder dissolved in a solvent is added to the mixture, to thereby prepare a slurry. The slurry is applied onto the current-collector 12, followed by drying, to thereby yield a positive electrode sheet.

Separately, the active material, and the conducting aid are mixed together, and a solution of a binder dissolved in a solvent is added to the mixture, to thereby prepare a slurry. The slurry is applied onto the current-collector 16, followed by drying, to thereby yield a negative electrode sheet.

While the separator 14 which separates the positive electrode sheet from the negative electrode sheet, the positive electrode sheet, and the negative electrode sheet are stacked, these members are wound by means of a winding device, to thereby provide a cylindrical or square cell. A terminal (not illustrated) is connected to each of the current-collectors 12, 16, and an electrolytic solution is charged into a container (not illustrated) accommodating the cell. The container is closely sealed, to thereby yield the power storage device 10 including the positive electrode 11, the separator 14, and the negative electrode 15.

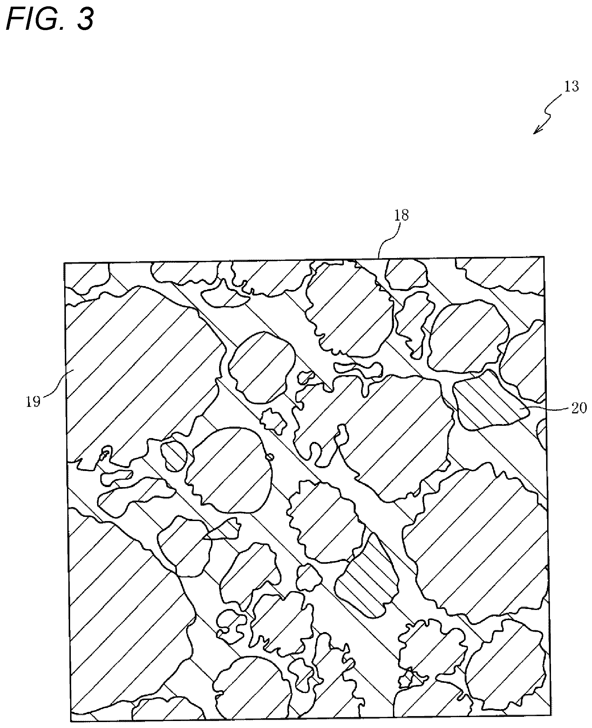

FIG. 3 is a cross-sectional view of the active material 19 and the solid electrolyte particles 20 appearing in the region 18 of the active material layer 13 of the positive electrode 11. The cross-section of the active material layer 13 is a polished surface, a surface obtained through irradiation with a focused ion beam (FIB), or a surface obtained through ion milling. In one embodiment, ion milling is conducted at an acceleration voltage of 4.0 kV and an environment temperature of -80°C for a processing time of 8 hours in vacuum ($10^{-3}$ Pa or lower).

The polished surface is obtained by, for example, freezing the active material layer 13, or embedding the active material layer 13 in a 4-functional epoxy resin or the like to solidify, followed by polishing. The active material 19 and particles 20 emerging in the cross-section are analyzed by means of a scanning electron microscope (SEM) equipped with an energy dispersive X-ray spectrometer (EDS). Through the analysis, distribution of elements is characterized, or contrast of a backscattered electron image is subjected to image analysis, to thereby characterize the active material 19 and particles 20.

The relative amount of the active material 19 in the active material layer 13 is preferably 70 vol% or more and 99.9 vol% or less, from the viewpoint of securing the capacity of the power storage device 10. The relative cross-sectional area of the active material 19 present in a square (50 $\mu$m $\times$ 50 $\mu$m, area: 2,500 $\mu$m$^2$) in the cross-section of the active material layer 13 is assumed as the active material 19 content (vol%). In the case in which the thickness of the active material layer 13 is less than 50 $\mu$m, a square (area: 2,500 $\mu$m$^2$) cannot be provided technically. In such a case, a rectangular parallel-piped region (area: 2,500 $\mu$m$^2$), defined by two short sides extending along the thickness direction (i.e., the length of each short side corresponding to the thickness of the active material layer 13) and two long sides orthogonal to the short sides. is provided, and the relative amount of the active material 19 in the area is determined.

The average circle-equivalent diameter of the active material 19 appearing in a cross-section of the active material layer 13 is preferably 5 $\mu$m or more, from the viewpoint of preventing enlargement of the interface of the active material 19, which would possibly cause an increase in charge transfer resistance. The circle-equivalent diameter of the active material 19 corresponds to a diameter of a circle having the same area as that of the cross-section of the active material 19 determined through image analysis. Specifically, the circle-equivalent diameter of each unit of the active material 19 appearing in a region (area: 2,500 $\mu$m$^2$) in the cross-section of the active material layer 13 is determined, and the sum of the circle-equivalent diameters is divided by the total number of the units of the active material 19, to thereby provide an average value. The average circle-equivalent diameter of the active material 19 appearing in a cross-section of the active material layer 13 is preferably 15 $\mu$m or less, from the viewpoint of securing the filling density of the active material 19.

The relative amount of the particles 20 in the active material layer 13 is preferably 0.1 vol% or more and 30 vol% or less, from the viewpoint of securing the capacity of the power storage device 10 and reaction sites between the active material 19 and the particles 20. The relative cross-sectional area of the particles 20 in a region (area: 2,500 $\mu$m$^2$) in the cross-section of the active material layer 13 is assumed as the particle 20 content (vol%).

The average circle-equivalent diameter of the particles 20 appearing in a cross-section of the active material layer 13 is preferably 10 $\mu$m or less, more preferably 5 $\mu$m or less, from the viewpoint of securing the number of reaction sites between the active material 19 and the particles 20. The circle-equivalent diameter of the particles 20 corresponds to a diameter of a circle having the same area as that of the cross-section of the particles 20 determined through image analysis. Specifically, the circle-equivalent diameter of unit of the particles 20 appearing in a region (area: 2,500 $\mu$m$^2$) in the cross-section of the active material layer 13 is determined, and the sum of the circle-equivalent diameters is divided by the total number of the particles 20, to thereby provide an average value. The average circle-equivalent diameter of the particles 20 appearing in a cross-section of the active material layer 13 is preferably 0.5 $\mu$m or more, from the viewpoint of facilitating handling of the particles 20.

The active material layer 13 may contain a binder for binding the active material 19 and a conducting aid that can reduce electron transfer resistance of the active material layer 13. Examples of the conducting aid include carbon black, acetylene black, Ketjen black, carbon fiber, Ni, Pt, and Ag.

No particular limitation is imposed on the binder, so long as the binder can bind the active material 19. Examples of the binder include fluororesin, polyolefin, polyimide, polyvinylpyrrolidone, poly(vinyl alcohol), cellulose ether, and rubber-like polymer such as styrene-butadiene rubber. Examples of the fluororesin include vinylidene fluoride-based polymer, poly(chlorotrifluoroethylene), poly(vinyl fluoride), tetrafluoroethylene-perfluoroalkyl vinyl ether copolymer, tetrafluoroethylene-hexafluoropropylene copolymer, ethylene-tetrafluoroethylene copolymer, and ethylene-chlorotrifluoroethylene copolymer.

The region 18 is a square region having each side of 20 $\mu$m in which 6 or more of the particles 20 appear within an area of 400 $\mu$m$^2$ in a cross-section of the active material layer 13. A SEM image of the square region having each side of 20 $\mu$m in the cross-section of the active material layer 13 is taken, and the particles 20 are detected through image analysis. The image has 160,000 pixels (i.e., 400 divisions of each side of the square). In order to suppress misdetection of due to image noise, the particles 20 have a dimension of 4 pixels or more.

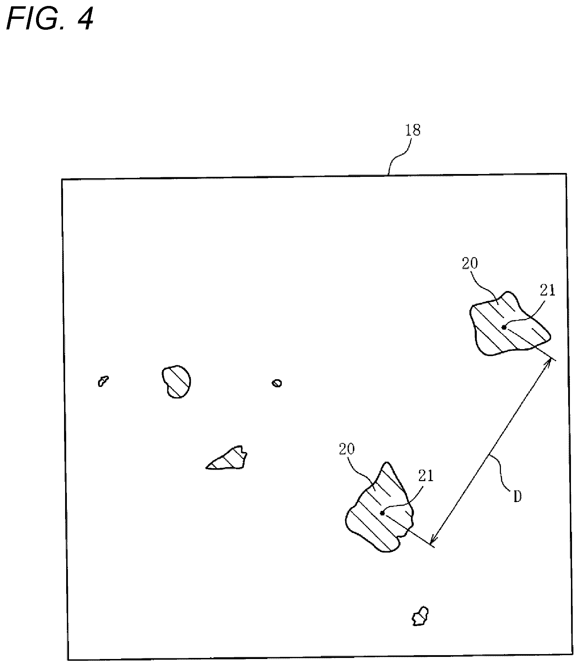

FIG. 4 is a cross-sectional view of the particles 20 appearing in the region 18 of the active material layer 13. Hereinafter, taking as an example the region 18 in which 7 particles 20 appear, further description will be conducted. The region 18 is a sector for calculating the average distance D between the particles 20. The reason for choosing the region 18 in which 6 or more of the particles 20 appear is to secure the accuracy of the calculated average distance D.

The distance D between the particles 20 is a length of the line segment linking the center of gravity of one particle 20 in the cross-section and that of the other particle 20. The center of gravity 21 is a geometric center of a cross-section of a particle 20 as a plane figure. From all the particles 20 appearing in the region 18, two particles 20 are chosen, and the distance D between the two particles is measured. The sum of the distances Ds measured in the same manner is divided by the number of combinations of the couples of particles 20 ($_7C_2$=21 in the embodiment), to thereby obtain an average value. The average distance D is 1.0 $\mu$m or longer. As a result, the particles 20 can be dispersed in the active material layer 13. Since the particles 20 are involved in transfer of electric charge carrier, the number of reaction sites can increase by virtue of the particles 20 dispersed in the active material layer 13. Thus, charge transfer resistance in the positive electrode 11 can be reduced.

Regarding dispersibility of the particles 20, the average distance D is preferably great to an appropriate degree, since the particles 20 are widely dispersed in the active material layer 13. The average distance D is preferably 2.0 $\mu$m or more, more preferably 3.0 $\mu$m or more, still more preferably 5.0 $\mu$m or more, yet more preferably 10.0 $\mu$m or more.

Further preferably, the average distance D between particles 20 is 1.0 $\mu$m or more in ten regions 18 selected at random in the cross-section of the active material layer 13, since dispersibility of the particles 20 in the active material layer 13 can be further enhanced.

EXAMPLES

The present invention will next be described in more detail by way of Examples, which should not be construed as limiting the invention thereto.

(Fabrication of cell)

Li$_2$CO$_3$, MgO, La(OH)$_3$, SrCO$_3$, and ZrO$_2$ were weighed in specific amounts so as to form Li$_{6.95}$Mg$_{0.15}$La$_{2.75}$Sr$_{0.25}$Zr$_{2.0}$O$_{12}$. In consideration of volatilization of Li during firing, the amount of Li$_2$CO$_3$ was adjusted in about 15 mol% excess (as reduced to Li). The thus-weighed raw materials and ethanol were put into a nylon-made pot with zirconia balls, and the mixture was subjected to pulverization with the ball mill for 15 hours. The resultant slurry was removed from the pot and dried, and then fired on an MgO plate at 1,100°C for 15 hours. After firing, the powder was further pulverized and put into a sheath made of MgO. Further firing was conducted at 1,100°C for 4 hours. After the additional firing operation, the powder was further pulverized in a glove box under argon, to thereby yield oxide solid electrolytes (hereinafter referred to as "LLZs") having different particle sizes. Through powder X-ray diffraction, a garnet-type crystal structure of LLZ was confirmed.

LiNi$_{0.6}$Mn$_{0.2}$Co$_{0.2}$O$_2$ (active material), acetylene black (conducting aid), LLZ (solid electrolyte particles), and poly(vinylidene fluoride) dissolved in N-methylpyrrolidone (binder) were weighed so as to attain proportions of active material : conducting aid : particles : binder of 93.5:3.0:0.5:3.0 (by volume), and the materials were mixed. By modifying the period of time of mixing, four slurries were prepared. Each of the slurries was applied onto an aluminum foil serving as a current-collector and dried at 80°C, to thereby yield four positive electrode sheets. Each positive electrode sheet was cut into a square piece (20 mm $\times$ 20 mm), to thereby prepare 4 types of positive electrodes. For comparison, a positive electrode of Comparative Example was also fabricated in the same manner, except that no particle was used in the solid electrolyte.

Graphite (active material), acetylene black (conducting aid), carboxymethylcellulose (thickener), and styrene-butadiene rubber dispersed in pure water (binder) were weighed so as to attain proportions of active material : conducting aid : thickener : binder of 97.7:0.3:1.0:1.0 (by volume), and the materials were mixed, to thereby yield a slurry. The slurry was applied onto an aluminum foil serving as a current-collector and dried at 120°C, to thereby yield a negative electrode sheet. The negative electrode sheet was cut into a square piece (25 mm $\times$ 25 mm), to thereby prepare a negative electrode.

Ethylene carbonate, dimethyl carbonate, and ethyl methyl carbonate were mixed at proportions of 1:1:1 (by volume), to thereby provide a solvent. $LiPF_6$ serving as a supporting electrolyte was dissolved in the solvent, to thereby prepare an electrolytic solution. The supporting electrolyte concentration of the electrolytic solution was 1 mol/L. A separator made of polypropylene was inserted between each of the five positive electrodes and the negative electrode, and the product was placed in a container made of coat film. The electrolytic solution was charged into the container, and the container was tightly closed, to thereby fabricate five cells (including a cell of Comparative Example).

(Test)

Each cell was tested under constant current-constant voltage charge/discharge at 25°C. Charging was conducted at a constant voltage until the current reached 0.01 C, after reaching of the terminal voltage to 4.2 V under constant current charging (0.2 C). Discharging was conducted at a constant voltage until the current reached 0.01 C, after reaching of the terminal voltage to 2.5 V under constant voltage discharging (0.2 C). The charge transfer resistance (at 20°C) of each cell after charging/discharging was measured through the AC impedance method (frequency: 1 MHz to 100 mHz).

After completion of measurement through the AC impedance method, the cell was dismantled, and a cross-section of the positive electrode was created through ion milling. An image of a cross-section of the active material layer was taken through SEM. The average inter-particle distance D in a square region (20 $\mu$m $\times$ 20 $\mu$m) where 6 or more particles (LLZ) were present was measured.

The cell of Comparative Example had a positive electrode containing no solid electrolyte particles. A relative charge transfer resistance of each of the cells of Examples with respect to the charge transfer resistance of the cell of Comparative Example was determined. Table 1 shows the average distance D and relative charge transfer resistance (%) of each cell.

[Table 1]

| No. | Distance D ($\mu$m) | Resistance (%) |
|-----|---------------------|----------------|
| 1 | 0.60 | 6 |
| 2 | 1.00 | -5 |
| 3 | 1.10 | -15 |
| 4 | 1.86 | -22 |

The cell having an average inter-particle distance D of 0.60 $\mu$m was found to exhibit an increase in charge transfer resistance of 6% with respect to that of the cell of Comparative Example containing no particles. The cell exhibited anomalous phenomena including 2-step discharge during discharging of the cell.

In contrast, the cells each having an average inter-particle distance D of 1.00 $\mu$m or more was found to exhibit a decrease in charge transfer resistance as compared with that of the cell of Comparative Example containing no particles. More specifically, the degrees of decrease were 5% in the cell having an average inter-particle distance D of 1.00 $\mu$m; 15% in the cell having an average inter-particle distance D of 1.10 $\mu$m; and 22% in the cell having an average inter-particle distance D of 1.86 $\mu$m. Thus, the charge transfer resistance was found to decrease, as the increase in average electric distance D.

According to the cells of Examples, overvoltage attributed to the resistance component of the positive electrode is reduced, when the average inter-particle distance D of the positive electrode is 1 $\mu$m or more. Thus, enhanced output/input characteristics of a power storage device is foreseeable. Also foreseeable is an increase in discharge capacity of a power storage device by virtue of an increased active material availability, since unevenness of charge carrier reaction sites is reduced.

The present invention has been described in detail by way of the embodiments. However, the present invention is not limited to the above embodiments. It can be easily inferred that those skilled in the art can easily conceive various improvements and modifications, so long as they fall within the scope of the present invention.

In the above-described embodiments, the power storage device 10 has the positive electrode 11 in which the active material layer 13 is provided on one surface of the current-collector 12, and the negative electrode 15 in which the active material layer 17 is provided on one surface of the current-collector 16. However, the present invention is not necessarily limited thereto. It should be apparent for those skilled in the art that the elements of the above embodiments can be applied to, for example, a power storage device in which an electrode layer having the current-collector 12 provided with the active material layer 13 and the active material layer 17 on each surface (i.e., a so-called bipolar electrode). By alternatingly stacking the bipolar electrode and the separator 14, and inserting the stacked product into a case (not illustrated), a so-called power storage device of a bipolar structure can be obtained.

REFERENCE SIGNS LIST

    10 power storage device
    11 positive electrode (electrode)
    18 region
    19 active material
    20 particle
    D inter-particle distance

**Claims**

1. An electrode comprising solid electrolyte particles, wherein

    the electrode contains the particles in an amount of 0.1 vol% or more and 30 vol% or less; and has an average inter-particle distance in a region in which 6 or more of the particles appear within an area of 400 $\mu m^2$ in a cross-section of the electrode is 1 $\mu m$ or more.

2. The electrode according to claim 1, wherein the particles appearing in the cross-section have an average circle-equivalent diameter of 10 $\mu m$ or less.

3. The electrode according to claim 1, wherein the particles appearing in the cross-section have an average circle-equivalent diameter of 5 $\mu m$ or less.

4. The electrode according to any of claims 1 to 3, wherein

    the electrode contains an active material, and the active material appearing in the cross-section have an average circle-equivalent diameter of 5 $\mu m$ or more.

5. The electrode according to any of claims 1 to 3, wherein the particles are formed of an oxide.

6. The electrode according to claim 5, wherein the particles have a garnet-type crystal structure including Li, La, and Zr.

7. A powder storage device having an electrode as recited in any of claims 1 to 3.

FIG. 1

FIG. 2

FIG. 3

FIG. 4

## INTERNATIONAL SEARCH REPORT

| International application No. |
| --- |
| **PCT/JP2024/030499** |

**A. CLASSIFICATION OF SUBJECT MATTER**

*H01M 4/13*(2010.01)i; *H01M 4/62*(2006.01)i; *H01M 10/052*(2010.01)i; *H01M 10/0562*(2010.01)i
FI: H01M4/13; H01M4/62 Z; H01M10/0562; H01M10/052

According to International Patent Classification (IPC) or to both national classification and IPC

**B. FIELDS SEARCHED**

Minimum documentation searched (classification system followed by classification symbols)

H01M4/13; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2023/149426 A1 (NGK SPARK PLUG CO., LTD.) 10 August 2023 (2023-08-10) paragraphs [0071]-[0098], fig. 1 | 1-7 |
| A | WO 2021/033424 A1 (NGK SPARK PLUG CO., LTD.) 25 February 2021 (2021-02-25) entire text, all drawings | 1-7 |
| A | WO 2022/196364 A1 (PANASONIC INTELLECTUAL PROPERTY MANAGEMENT CO., LTD.) 22 September 2022 (2022-09-22) entire text, all drawings | 1-7 |
| A | WO 2021/181529 A1 (HONDA MOTOR CO., LTD.) 16 September 2021 (2021-09-16) entire text, all drawings | 1-7 |
| A | JP 2013-196968 A (TOYOTA JIDOSHA KABUSHIKI KAISHA) 30 September 2013 (2013-09-30) entire text, all drawings | 1-7 |

☑ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **05 November 2024** | **19 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

| International application No. |
| --- |
| **PCT/JP2024/030499** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2020-0020649 A (LG CHEMICAL, LTD.) 26 February 2020 (2020-02-26)<br>entire text, all drawings | 1-7 |

Form PCT/ISA/210 (second sheet) (July 2022)

**INTERNATIONAL SEARCH REPORT**
**Information on patent family members**

International application No.

**PCT/JP2024/030499**

| Patent document cited in search report | | | Publication date (day/month/year) | Patent family member(s) | | | Publication date (day/month/year) |
|---|---|---|---|---|---|---|---|
| WO | 2023/149426 | A1 | 10 August 2023 | CN | 118575232 | A | |
| | | | | TW | 202339338 | A | |
| WO | 2021/033424 | A1 | 25 February 2021 | US | 2022/0294009 | A1 | |
| | | | | EP | 4020618 | A1 | |
| | | | | CN | 114270559 | A | |
| | | | | KR | 10-2022-0038423 | A | |
| WO | 2022/196364 | A1 | 22 September 2022 | US | 2023/0411682 | A1 | |
| | | | | CN | 117015889 | A | |
| WO | 2021/181529 | A1 | 16 September 2021 | US | 2023/0106779 | A1 | |
| | | | | CN | 115136343 | A | |
| JP | 2013-196968 | A | 30 September 2013 | (Family: none) | | | |
| KR | 10-2020-0020649 | A | 26 February 2020 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018198494 A